# FASCICULE DE BREVET EUROPEEN

(11) **EP 1 977 430 B1**
(45) Date de publication et mention de la délivrance du brevet: **05.04.2017**
(21) Numéro de dépôt: 07700254.1
(22) Date de dépôt: 17.01.2007
(51) Int. Cl.: G21C 19/07, G21F 9/36, G21F 9/34

(54) **ÉLÉMENT DE STOCKAGE DE COMBUSTIBLE NUCLÉAIRE EMPILABLE ET MODULE DE STOCKAGE FORMÉ PAR UN EMPILEMENT DE TELS ÉLÉMENTS**
ELEMENT ZUR LAGERUNG VON STAPELBAREN KERNBRENNSTOFFELEMENTEN UND AUS SOLCHEN LAGERUNGSELEMENTEN GEBILDETES LAGERUNGSMODUL
STACKABLE STORAGE ELEMENT FOR NUCLEAR FUEL, AND STORAGE MODULE FORMED BY A STACK OF SUCH ELEMENTS

(30) Priorité: 26.01.2006 FR 0650281
(43) Date de publication de la demande: 08.10.2008
(73) Titulaire: Commissariat à l'Énergie Atomique et aux Énergies Alternatives, 75015 Paris (FR)
(72) Inventeur: BONTEMPS, Virginie, F-84000 Avignon (FR); ARGOUD, Jean-Claude, F-38330 Montbonnot (FR)
(74) Mandataire: Ilgart, Jean-Christophe
(86) Numéro de dépôt international: PCT/EP2007/050438
(87) Numéro de publication internationale: WO 2007/085555

(56) Documents cités:
- DE-A1- 3 916 359
- FR-A- 2 449 952
- FR-A- 2 498 367
- FR-A- 2 803 426
- US-A- 4 780 269

## Description

### DOMAINE TECHNIQUE ET ART ANTÉRIEUR

La présente invention se rapporte à l'entreposage temporaire à sec, par exemple entre 50 et 100 ans, en position horizontale de combustible nucléaire, en particulier de combustible nucléaire irradié en attente d'un stockage géologique définitif ou d'un retraitement.

Dans le cadre de la gestion des combustibles irradiés, après leur utilisation en réacteur, ceux-ci subissent une étape de refroidissement en piscine dans un bâtiment, dit bâtiment combustible, qui se trouve généralement à côté du bâtiment réacteur.

A la fin de cette étape de refroidissement, les assemblages de combustible nucléaire doivent ensuite être évacués vers des sites de stockage dits « définitifs ou intérimaires » sûrs, comprenant notamment des enceintes métalliques étanches protégées par des modules de stockage en béton.

Dans ce cadre, il est alors envisagé de conditionner les combustibles irradiés dans des étuis clos de manière étanche, formant la première barrière de confinement. Ensuite, chaque étui est placé dans un dispositif d'entreposage à sec qui constitue sa protection et la seconde barrière de confinement.

Il existe deux modes d'entreposage :
- le premier mode d'entreposage est un entreposage en position verticale, les étuis étant disposés dans des puits. Ce mode d'entreposage permet un gain de place important, cependant sa construction est très coûteuse et très lourde à mettre en oeuvre. En effet, il faut creuser des puits, couler des fondations. De plus, la législation requiert que l'on puisse récupérer le combustible nucléaire à tout moment. Or en cas de rupture de l'étui, la récupération du combustible dans le fond du puit devient très laborieuse,
- le deuxième mode de stockage est un stockage horizontal, pour lequel des logements en béton accessibles par leurs deux extrémités peuvent être prévus.

Le document US 4 780 269 décrit un module de stockage d'assemblage de combustible nucléaire à l'horizontale. Chaque module comporte un logement pour un assemblage, qui est introduit dans le logement par une extrémité avant de celui-ci. Chaque module ne comporte qu'un seul assemblage. Ces modules sont prévus pour pouvoir être disposés l'un contre l'autre selon un plan horizontal pour limiter les émissions de rayonnements latéraux, mais ils restent cependant très encombrants et d'un prix de revient élevé.

Ce module de stockage comporte également des moyens de ventilation permettant l'évacuation de l'air chaud. Ces moyens de ventilation comportent des orifices d'entrée d'air frais pratiqués dans l'extrémité avant du module en dessous du logement de l'assemblage et des cheminées d'évacuation de l'air chaud sur le toit du module. Le refroidissement s'effectue par convexion naturelle.

Ces dispositifs de stockage sont très encombrant, le stockage de plusieurs assemblage implique de disposer d'une surface au sol importante.

Le document FR 2 498 367 décrit un dispositif de stockage de matières radioactives comportant des cellules de stockage dans lesquelles sont prévus des casiers de stockage juxtaposés verticalement et horizontalement pour recevoir des récipients de stockage de matières radioactives.

Le refroidissement des récipients est réalisé par écoulement d'air à l'intérieur des casiers.

Cependant, les récipients ne sont pas isolés les uns des autres. Ainsi en cas de rupture d'un récipient, toute la cellule est contaminée. Par ailleurs, ces cellules ne sont pas modulaires et nécessitent une construction lourde.

C'est par conséquent un but de la présente invention est d'offrir un dispositif de stockage sûr et permettant de récupérer le combustible nucléaire pendant toute la durée du stockage, quel que soit son état.

C'est également un but de la présente invention d'offrir un dispositif de stockage compact et offrant une grande capacité de stockage.

### EXPOSÉ DE L'INVENTION

Les buts précédemment énoncés sont atteints par un dispositif de stockage de combustible nucléaire selon la revendication 1 à l'horizontale comportant des logements pour les étuis, munis de moyens de ventilation, par exemple par convexion naturelle, formés d'orifices pour l'admission et l'évacuation de l'air, ces trous étant pratiqués dans des extrémités longitudinales du logement.

En d'autres termes, au lieu de réaliser une évacuation d'air chaud sur le haut de l'élément de stockage comme dans l'état de la technique, celui-ci est prévu sur un coté de chargement et/ou de déchargement et/ou de manipulation qui reste accessible pendant toute la durée du stockage. Ainsi les dispositifs peuvent être empilés et juxtaposés, pour former des massifs de stockage appelés modules. On peut ainsi stocker un nombre important d'assemblages sur une surface réduite.

Le dispositif selon l'invention est en outre modulaire, ainsi il est possible de réaliser une unité de stockage de capacité de stockage adaptée aux besoins, et si cela est nécessaire d'augmenter cette capacité de manière simple en ajoutant des éléments selon l'invention. Ainsi, il est possible d'adapter les investissements financiers en fonction de la demande d'entreposage, sans anticiper sur les besoins futurs.

De manière avantageuse, le refroidissement est assuré par convexion naturelle de l'air, ce qui ne nécessite pas de dispositif supplémentaire provoquant une convexion. Le coût d'exploitation en est alors réduit.

Les éléments ou alvéoles peuvent recevoir plusieurs étuis. Ces éléments peuvent être de section transversale hexagonale ou formée par une portion d'hexagone. Leur aptitude à être empilé permet la réalisation d'une unité de stockage sur plusieurs niveaux appelée module d'entreposage, dont l'encombrement est optimisé.

Une alvéole comporte, dans un exemple de réalisation, deux barrières étanches qui sont surveillées en permanence.

La durée de vie de l'élément de stockage selon l'invention est d'environ 100 ans.

Le dispositif de chargement selon l'invention permet également de charger ou de décharger le combustible par une face avant ou arrière. Ainsi il est possible de retirer le combustible quelque soit l'état de l'étui.

En outre, la protection biologique peut être placée à la périphérie du module et sur sa partie supérieure. Elle est constituée de dalles de béton dont l'épaisseur peut être optimisée en fonction du débit de dose requis sur ses faces extérieures ou en fonction de la tenue mécanique souhaitée.

En outre, l'empilement des éléments selon l'invention permet de réduire les émissions du fait de la superposition des épaisseurs de béton formant les alvéoles.

La présente invention a par conséquent principalement pour objet un élément pour le stockage de combustible nucléaire, comportant au moins un logement d'axe longitudinal destiné à être à l'horizontale pour recevoir un étui chargé de combustible nucléaire, comportant des première et deuxième extrémités longitudinales fermées par des bouchons amovibles, lesdites première et deuxième extrémités fermées par les bouchons formant des première et deuxième faces de l'élément, l'une au moins parmi les première et deuxième extrémités permettant le passage de l'étui, des moyens de ventilation comportant un canal bordant le logement, au moins un orifice dans la première face débouchant dans ledit canal et au moins un orifice dans la deuxième face débouchant dans ledit canal.

Dans un mode préféré de réalisation, l'élément de stockage a une section transversale formée par au moins une portion d'un hexagone régulier.

Il peut s'agir d'un élément ayant une section transversale formée par un hexagone régulier, comportant par exemple sept logements.

Il peut également s'agir d'un élément ayant une section transversale formée par un trapèze régulier obtenu en coupant un hexagone régulier par une droite passant par deux angles opposés dudit hexagone. Cet élément peut être muni de deux logements.

L'élément peut également avoir une section transversale formée par un trapèze rectangle obtenu en coupant un hexagone régulier par une droite passant par deux angles opposés dudit hexagone et par une médiatrice d'un côté dudit hexagone, la droite et la médiatrice étant perpendiculaires. Il peut alors comporter un logement.

De manière avantageuse, le logement est délimité par un premier tube en contact direct avec au moins un étui, le canal de refroidissement entourant ledit premier tube.

L'élément peut également comporter un deuxième tube délimitant avec le premier tube le canal de refroidissement, le deuxième tube étant entouré de béton.

Le premier tube est alors, par exemple maintenu suspendu dans le deuxième tube au moyen de flasques fixés aux extrémités longitudinales des premier et deuxième tubes, et dans lesquelles les orifices de ventilation sont réalisés.

Les deux bouchons du logement sont avantageusement fixés chacun sur un flasque, par exemple par soudage ou par vissage.

On peut également prévoir des joints métalliques et un joint en matériau synthétique entre les bouchons et les flasques.

Le premier tube est par exemple en acier inoxydable et le deuxième tube est en fonte.

L'élément selon la présente invention comporte avantageusement des moyens de contrôle de l'étanchéité de l'étui et du logement comprenant des moyens d'injection d'hélium et de détection d'hélium et/ou des moyens de contrôle munis de capteurs de la pression régnant dans le logement.

La présente invention a également pour objet un module pour le stockage horizontal de combustible nucléaire en étui, comportant un empilement d'éléments selon la présente invention.

Le module ne comporte avantageusement que des éléments ayant une section transversale obtenue à partir d'un même hexagone régulier de manière à former un empilement compact ayant la forme d'un parallélépipède rectangle.

Le module est avantageusement entouré par une chape de béton sur une face inférieure, une face supérieure et des faces latérales, les faces longitudinales des logements n'étant pas recouvertes afin de les laisser accessibles pour des contrôles des conditions de stockage.

### BRÈVE DESCRIPTION DES DESSINS

La présente invention sera mieux comprise à l'aide de la description qui va suivre et des dessins annexés, sur lesquels :
- la figure 1A est une vue de face d'un exemple de réalisation d'un module de stockage selon la présente invention,
- la figure 1B est une vue de face d'un élément de stockage seul selon l'invention,
- la figure 2 est une vue en coupe longitudinale d'une partie d'un élément de stockage selon la présente invention,
- la figure 3A et 3B sont des représentations schématiques pour la réalisation d'éléments selon la présente invention,
- la figure 4 est une vue de face d'un autre exemple d'éléments selon la présente invention,
- la figure 5 est une vue de détail de la figure 2.

### EXPOSÉ DÉTAILLÉ DE MODES DE RÉALISATION PARTICULIERS

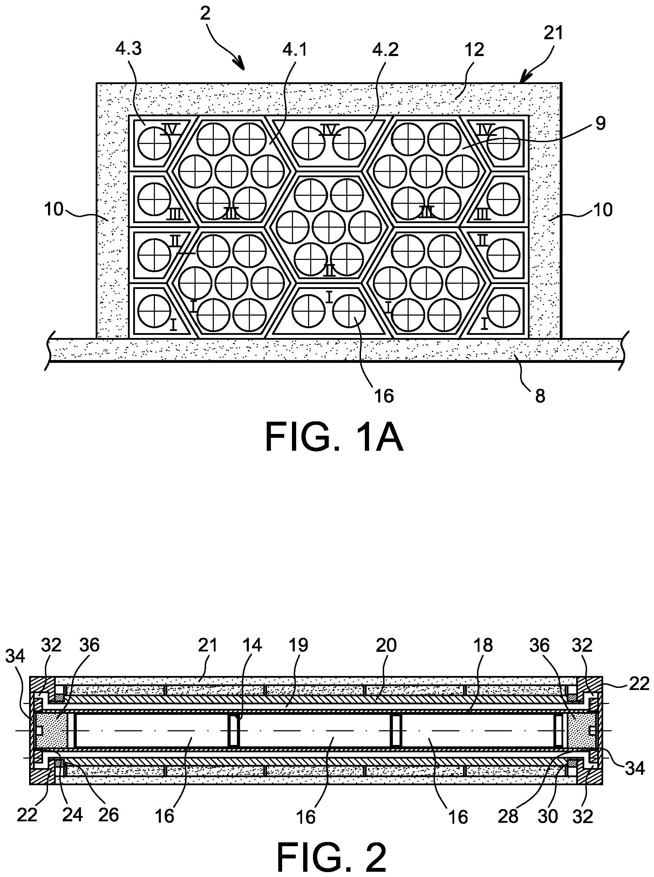

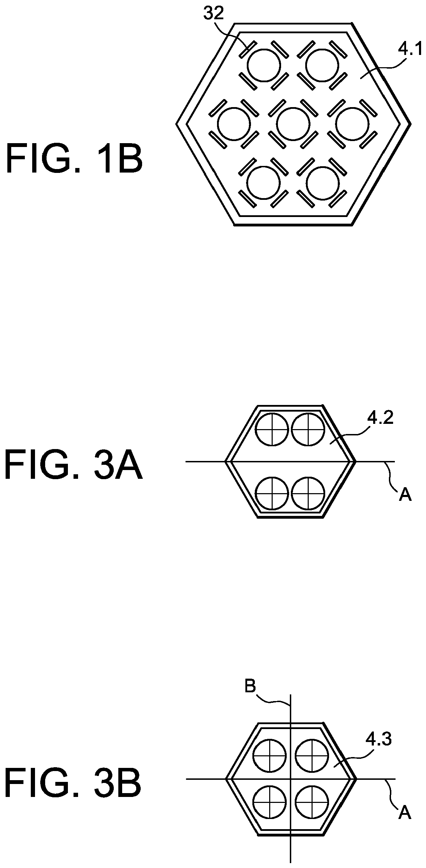

Sur les figure 1A et 1B, on peut voir une vue de face d'un module de stockage 2 selon la présente invention comportant une pluralité d'éléments de stockage 4.1, 4.2, 4.3 empilés et juxtaposés.

Dans l'exemple représenté, le module 2 comporte des éléments de stockage 4.1, 4.2, 4.3 de forme complémentaire, de manière à optimiser l'espace utilisé et avantageusement, de manière à pouvoir construire un parallélépipède rectangle.

Nous allons tout d'abord décrire un élément de stockage 4.1.

L'élément 4.1 a une section transversale formée par un hexagone régulier et comporte des logements cylindriques 14 (non visibles sur les figures 1A et 1B) accessibles par une face latérale 9 de l'élément. Chaque logement est destiné à recevoir au moins un étui 16 chargé de combustible nucléaire irradié. Les étuis 16 sont formés par des tubes fermés à leurs deux extrémités longitudinales de manière étanche et chargés en combustible nucléaire, en particulier en combustible nucléaire irradié.

Dans l'exemple représenté, l'élément comporte sept logements, répartis en trois niveaux, un premier niveau de deux logements, un deuxième niveau de trois logements et un troisième niveau de deux logements, les trois niveaux étant parallèles entre eux et à un coté de l'hexagone.

On pourrait prévoir suivant la taille de l'élément d'avoir plus ou moins de logements 14.

Le contour extérieur de l'élément 4.2 est obtenu en prenant une des portions de l'hexagone régulier, délimitée par une droite A passant par deux sommets opposés de l'hexagone. Cette section transversale est alors en forme de trapèze régulier.

Dans l'exemple représenté, cet élément 4.2 comporte deux logements 14.

Le contour extérieur de l'élément 4.3 est obtenu en prenant une des portions de l'hexagone régulier, délimitée par une droite A passant par deux sommets opposés de l'hexagone et par une médiatrice B d'un côté de l'hexagone, la droite A et la médiatrice B étant perpendiculaires. Cette section transversale est alors en forme de trapèze rectangle.

De manière avantageuse, les éléments 4.2 et 4.3 sont obtenus à partir du même contour extérieur que celui de l'élément 4.1. Ainsi, les éléments 4.1, 4.2, 4.3 sont de forme complémentaire, facilitant l'empilement et augmentant la compacité du module.

Nous allons maintenant décrire l'empilement formant le module 2, de la gauche vers la droite sur la figure 1.

Sur une première rangée I, sont disposés un élément 4.3, puis un élément 4.1, un élément 4.2, un élément 4.1 et enfin un élément 4.2. Les éléments 4.1, 4.2, 4.3 sont en appui plan par un de leurs côtés.

La position des éléments 4.1, 4.2 et 4.3 sur cette première rangée I est considérée comme la position à l'endroit. La position des éléments pour les autres rangées sera donnée par rapport à leur position dans la première rangée I.

La deuxième rangée II comporte un élément 4.3 à l'envers, un élément 4.1 et un élément 4.3 à l'envers.

La troisième rangée III comporte, un élément 4.3, un élément 4.1, un élément 4.1 et un élément 4.3.

La quatrième rangée IV comporte un élément 4.3 à l'envers, un élément 4.2 à l'envers et un élément 4.3 à l'envers.

Une telle disposition forme un parallélépipède rectangle.

Ce parallélépipède est disposé sur une chape 8 en béton. En outre, sont prévues des chapes latérales 10 et une chape supérieure 12 de manière à améliorer le confinement des rayonnements. Les chapes latérales 10 et la chape supérieure 12 sont placées après la construction du module.

Aucun revêtement supplémentaire n'est prévu au niveau des extrémités longitudinales des éléments, de manière à permettre l'accessibilité aux étuis 16 et systèmes de contrôle qui seront décrits par la suite.

Cette configuration d'empilement présente l'avantage d'être autoporteuse, ce qui évite de devoir sceller les différents éléments entre eux lors de leur mise en place.

Le module représenté à la figure 1 met en oeuvre tous les types d'élément de stockage 4.1, 4.2, 4.3 selon l'invention. Mais on pourrait envisager de n'utiliser qu'un type d'élément de stockage selon la présente invention.

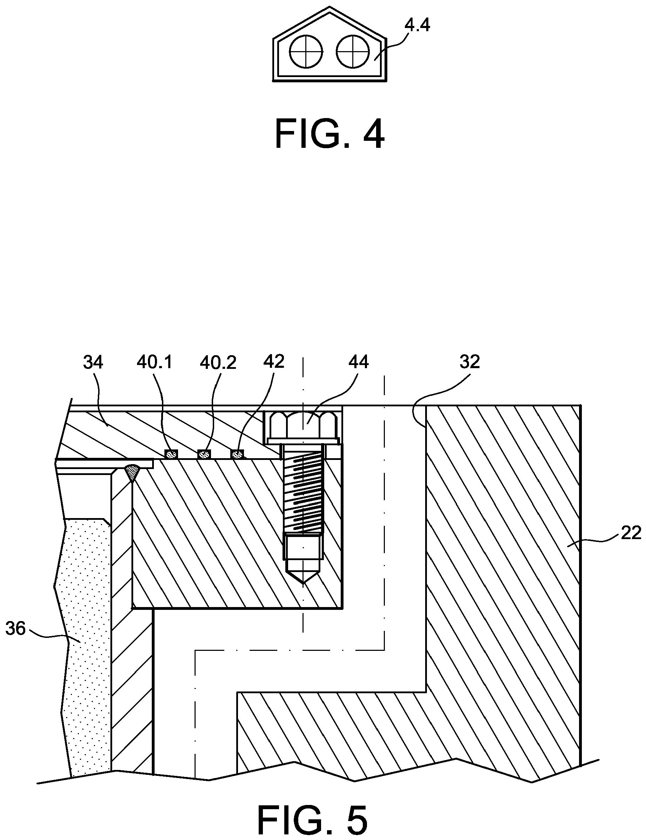

On peut également prévoir un élément 4.4 tel que celui représenté sur la figure 4, pour remplacer deux éléments 4.3 disposés sur les côtés du module. Dans ce cas, on prévoit des éléments de maintien de l'élément 4.4 en position verticale du côté extérieur de l'empilement.

Un module plus long et plus haut que celui décrit précédemment ne sort pas du cadre de la présente invention. Un module de forme différente ne sort également pas du cadre de la présente invention.

Lorsque l'on souhaite augmenter la capacité de stockage, il suffit de rajouter des éléments et de les empiler de la manière décrite précédemment.

Ainsi, on peut construire un module de stockage correspondant à des besoins à un moment donné, et rajouter des éléments pour augmenter cette capacité sans augmenter les coûts par rapport à une construction en une seule fois.

De manière avantageuse, on construit des modules de stockage séparés. Ainsi, pour augmenter la capacité de stockage, il est prévu de réaliser un nouveau module au lieu d'agrandir un module existant.

De plus, la présente invention permet un démantèlement simplifié de l'unité de stockage, puisqu'il suffit de détruire les chapes 10, 12, et d'enlever un par un les éléments 4.1, 4.2, 4.3.

La présente invention ne se limite pas à des éléments à section hexagonale ou en portion d'hexagone, mais à tout élément de stockage dont la forme permet un empilement compact, par exemple à section rectangulaire, carrée, triangulaire ou même à section circulaire.

Nous allons maintenant décrire les logements 14 de réception des étuis 16.

Sur la figure 2, on peut voir un logement 14 comportant un premier tube 18 destiné à contenir au moins un étui 16 centré dans le premier tube 18. Dans l'exemple représenté, il contient trois étuis 16 alignés.

Le tube 18 est disposé dans un deuxième tube 20 de manière sensiblement coaxiale à celui-ci, de manière à ménager un canal annulaire 19 entre les premier 18 et deuxième 20 tubes.

Le premier tube 18 est maintenu suspendu dans le deuxième tube 20 par l'intermédiaire de flasques 22 disposés à chacune des première 24, 26 et deuxième 28, 30 extrémités longitudinales respectivement des premier 18 et deuxième 20 tubes. Les premier et deuxième tubes sont par exemple soudés sur les flasques 22.

Les flasques 22 ont une forme extérieure adaptée à la forme extérieure de l'élément. Par exemple, elles ont une forme hexagonale pour l'élément 4.1, et une forme trapézoïdale pour l'élément 4.2.

De manière avantageuse, le premier tube 18 peut comporter sur sa surface extérieure des ailettes (non représentées) améliorant le transfert de chaleur et le refroidissement du tube et de son contenu.

Des orifices 32 sont prévus dans les flasques 22 pour permettre une admission d'air dans le canal 19 et une sortie d'air du canal 19, afin de réaliser un refroidissement des étuis par balayage du premier tube 20. Les moyens de refroidissement sont donc disposés sur des faces longitudinales des éléments et ne gênent pas pour l'empilement des éléments.

Les orifices 32 sont représentés sur la figure 1B, et ne le sont pas sur les figures 3A, 3B et 4.

Dans l'exemple représenté, des moyens de convexion artificielle (non représentés), par exemple mettant en oeuvre des ventilateurs sont mis en oeuvre pour assurer un écoulement de l'air le long du premier tube 18. La mise en oeuvre de moyens de convexion artificielle permet d'assurer un débit d'écoulement important du fait du nombre important d'orifices.

Cependant un refroidissement par convexion naturelle est suffisant, pour cela les orifices d'entrée d'air sont pratiqués dans une partie inférieure d'une des flasques 22 en dessous du premier tube 18 et les orifices d'évacuation d'air sont pratiqués dans une partie supérieure de l'autre flasque au dessus du premier tube 18.

Le premier tube 18 est par exemple en acier inoxydable, ainsi que l'étui 16, et le deuxième tube 20 est par exemple en fonte.

Le premier tube 18 est fermé de manière étanche à ses première 24 et deuxième 28 extrémités par deux bouchons 34. Ces bouchons 34 sont avantageusement fixés dans les flasques 22. La figure 5 montre un détail de la coopération du bouchon 34 et du flasque 22.

Les bouchons 34 sont, par exemple munis de trois joints, deux joints métalliques 40.1, 40.2 de type Hélicoflexe® en aluminium d'une durée de vie d'environ 50 ans, et un joint périphérique 42 en matière synthétique de type EPDM, tel que cela est représenté sur la figure 5. Les bouchons 34 sont maintenus sur les flasques, par exemple au moyen de vis 44 traversant le bouchon 34 et se vissant dans le flasque 22.

Comme nous le verrons dans la suite de la description, le bouchon 34 est avantageusement équipé d'une prise pour effectuer des prélèvements afin de contrôler l'étanchéité des étuis et du système d'étanchéité du bouchon 34.

Les bouchons 34 peuvent également être directement soudés après remplissage des tubes 18. Dans ce cas, l'étanchéité de la soudure pourra être contrôlée par des moyens bien connus de l'homme du métier, tels que l'injection d'hélium.

Les flasques 22 servent également à assurer l'étanchéité vis-à-vis du rayonnement, en participant à la protection biologique des faces avant et arrière des modules.

L'élément comporte également des deuxièmes bouchons 36 introduits dans le tube 18, formant une protection biologique. Les bouchons 36 sont formés par une masse.

Les éléments selon l'invention comportent un revêtement extérieur 21 en béton, recouvrant le deuxième tube 20. Il peut s'agir d'un béton standard, celui-ci servant d'écran contre le rayonnement gamma. En outre, le béton permet avantageusement de donner une stabilité à l'empilement des modules en cas de séisme. En outre, il permet avantageusement aux modules de résister à l'impact, par exemple d'une chute d'avion.

De manière avantageuse, la présente invention offre une grande sécurité de confinement du combustible nucléaire.

L'air servant au refroidissement du combustible n'est jamais en contact avec l'étui, mais uniquement avec le premier tube 18.

En outre, le confinement est assuré par
- la gaine du combustible,
- la soudure de l'étui,
- le premier tube 18 et sa soudure sur les flasques 22,
- les deux joints métalliques 40.1, 40.2 et/ou la soudure éventuelle des bouchons du premier tube 18,
- les joints des systèmes de contrôle d'étanchéité.

L'étanchéité est assurée par les deux joints métalliques 40.1, 40.2 en série suivie d'un troisième joint 42 en élastomère, tel que décrit précédemment.

Le contrôle s'effectue de la manière suivante : on injecte de l'hélium entre les deux joints métalliques 40.1, 40.2, on contrôle ensuite l'étanchéité du joint métallique intermédiaire 40.2 en connectant le détecteur d'hélium entre le deuxième joint métallique 40.2 et le joint périphérique 42.

Il est également prévu des moyens pour contrôler les différentes barrières de confinement, par exemple par plusieurs prises d'échantillon et un système d'injection d'hélium.

Le système de contrôle de l'étanchéité de l'étui 16 est placé sur le bouchon 34 de fermeture du premier tube 18 et permet de contrôler l'étanchéité des étuis par un système de détection d'hélium, l'hélium ayant été injecté dans l'étui lors de sa fermeture. Ainsi, en cas de détection d'hélium dans le tube 18, on saura que l'étui n'est plus étanche.

On peut également envisager de placer un capteur sur le bouchon 34 de fermeture du premier tube 18, qui détectera la perte de confinement de l'étui 16 par une montée de pression dans le premier tube 18.

Le contrôle du système d'étanchéité du bouchon de fermeture 34 du premier tube 18 est assuré par une première prise d'injection d'hélium placée entre les deux joints métalliques décrits précédemment.

Une seconde prise de mesure, sur laquelle est connecté un détecteur hélium, est placée entre un joint métallique 40.2 et le joint périphérique 42 en matière synthétique.

En outre, ce joint 42, en plus de servir au contrôle d'étanchéité, protège les joints métalliques 40.1, 40.2 contre l'humidité et la corrosion.

Pour le contrôle du système d'étanchéité du bouchon de fermeture 34 du premier tube 18 et de l'étui 16, on peut prévoir de pressuriser le premier tube 18 et l'étui 16 à des pressions différentes. Ainsi par des capteurs de pression, on peut contrôler indirectement l'étanchéité de l'étui 16 ou du premier tube 18.

En cas de fuite de l'étui 16, la pression dans le premier tube 18 va augmenter, cette augmentation de pression va être détectée et analysée comme une fuite de l'étui 16.

Le moyen de contrôle du tube 18 peut être réalisé par injection de gaz traceur dans l'espace libre entre les tubes 18 et 20, en mettant cet espace sous pression.

Nous allons maintenant décrire le chargement d'un tel élément.

L'étui est transporté à l'intérieur d'un container de transport offrant une deuxième barrière biologique et une protection mécanique.

L'étui vide est placé dans le container, l'ensemble est ensuite immergé dans une piscine pour le chargement de l'étui avec le combustible nucléaire irradié.

Lorsque l'étui a été scellé et le container refermé, l'ensemble est transporté par exemple allongé en position horizontale sur une remorque d'un camion.

Pour la mise en place dans un élément de stockage selon la présente invention, le container chargé avec l'étui est avantageusement disposé sur une plateforme élévatrice automotrice qui assure le transport horizontal de l'emballage de transport et l'ajustement vertical pour disposer l'étui en regard d'une ouverture du premier tube 18.

Le container est disposé en regard d'un élément de stockage, un dispositif permettant l'ouverture du container et de l'élément de stockage en isolant l'environnement extérieur des rayonnements, est interposé entre le container et l'élément de stockage et est connecté à chacun de manière étanche.

Le fond de l'étui et son couvercle sont équipés d'un dispositif de préhension permettant de le retirer par ces deux extrémités.

Un moyen pour transférer l'étui, du container dans l'élément de stockage est prévu.

Lorsque le transfert de l'étui est terminé et que l'élément de stockage et le container sont refermés, ceux-ci sont séparés.

Des contrôles d'étanchéité sont réalisés durant toute la durée du stockage.

La présente invention permet donc de réaliser un dispositif de stockage d'une très grande sûreté et offrant une capacité de stockage modulable à un coût de revient très inférieur aux solutions de stockage actuelles. Elle est également simple à mettre en oeuvre.

## Revendications

1. Elément pour le stockage de combustible nucléaire, comportant au moins un logement (14) d'axe longitudinal (X) destiné à être disposé horizontalement pour recevoir un étui (16) chargé de combustible nucléaire, des première (24) et deuxième (28) extrémités longitudinales munies de passages pour accéder au logement, et des moyens de ventilation
**caractérisé en ce que** lesdits passages sont fermés de manière étanche par des bouchons (34) amovibles, et **en ce que** les moyens de ventilation comportent un canal de refroidissement (19) entourant le logement (14) et isolé dudit logement de manière étanche, et des orifices (32) de ventilation réalisés dans les première et deuxième faces de l'élément et débouchant dans ledit canal de refroidissement.

2. Elément selon la revendication 1, ayant une section transversale formée par au moins une portion d'un hexagone régulier.

3. Elément selon la revendication 2, ayant une section transversale formée par un hexagone régulier.

4. Elément selon la revendication 2, ayant une section transversale formée par un trapèze régulier obtenu en coupant un hexagone régulier par une droite (A) passant par deux angles opposés dudit hexagone.

5. Elément selon la revendication 2, ayant une section transversale formée par un trapèze rectangle obtenu en coupant un hexagone régulier par une droite (A) passant par deux angles opposés dudit hexagone et par une médiatrice (B) d'un côté dudit hexagone, la droite et la médiatrice étant perpendiculaires.

6. Elément selon l'une quelconque des revendications précédentes, comportant un premier tube (18) délimitant le logement (14) et fermé de manière étanche par les bouchons (34), ledit premier tube (18) étant destiné à être en contact direct avec au moins un étui (16), et entouré par le passage de refroidissement (19), et un deuxième tube (20) délimitant avec le premier tube (18) le canal de refroidissement (19), le deuxième tube (20) étant entouré de béton.

7. Elément selon la revendication précédente, dans lequel le premier tube (18) est maintenu suspendu dans le deuxième tube (20) au moyen de flasques (22) fixés aux extrémités longitudinales (24, 26, 28, 30) des premier (18) et deuxième (20) tubes, et dans lesquelles les orifices (32) de ventilation sont réalisés, lesdites flasques recevant les bouchons (34) et formant les faces longitudinales de l'élément.

8. Elément selon la revendication précédente, dans lequel les bouchons (34) sont soudés sur les flasques (22).

9. Elément selon la revendication 7 ou 8, dans lequel des joints métalliques (40.1, 40.2) et un joint en matériau synthétique (42) sont prévus entre les bouchons (34) et les flasques (22).

10. Elément selon l'une quelconque des revendications 1 à 9, comportant des moyens de contrôle de l'étanchéité de l'étui (16) et du logement (14).

11. Elément selon la revendication précédente, dans lequel les moyens de contrôle comportent des moyens d'injection d'hélium et de détection d'hélium.

12. Elément selon la revendication 10 ou 11, dans lequel les moyens de contrôle comportent des capteurs de la pression régnant dans le logement (14).

13. Module pour le stockage horizontal de combustible nucléaire en étui, comportant un empilement d'éléments (4.1, 4.2, 4.3) selon l'une quelconque des revendications précédentes.

14. Module selon la revendication précédente en combinaison avec la revendication 2, dans lequel tous les éléments (4.1, 4.2, 4.3) ont une section transversale obtenue à partir d'un même hexagone régulier de manière à former un empilement compact.

15. Module selon la revendication 13 ou 14, entouré par une chape (8, 10, 12) de béton sur une face inférieure (8), une face supérieure (12) et des faces latérales (12), les faces longitudinales des logements (14) n'étant pas recouvertes.

## Patentansprüche

1. Element für die Lagerung von Kernbrennstoff, umfassend wenigstens eine Aufnahme (14) mit longitudinaler Achse (X), die dazu ausgelegt ist, horizontal angeordnet zu sein, um eine mit Kernbrennstoff beladene Hülle (16) aufzunehmen, ferner ein erstes (24) und ein zweites (28) longitudinales Ende, die mit Durchgängen zum Zugriff auf die Aufnahme ausgestattet sind, sowie Ventilationsmittel,
**dadurch gekennzeichnet, dass** die Durchgänge auf dichte Weise durch entfernbare Stopfen (34) verschlossen sind, und dass die Ventilationsmittel einen Kühlkanal (19) umfassen, der die Aufnahme (14) umgibt und auf dichte Weise von der Aufnahme isoliert ist, sowie Ventilationsöffnungen (32), die in der ersten und der zweiten Fläche des Elements realisiert sind und in den Kühlkanal münden.

2. Element nach Anspruch 1, das einen Querschnitt aufweist, der durch wenigstens einen Bereich eines gleichmäßigen Sechsecks gebildet ist.

3. Element nach Anspruch 2, das einen Querschnitt aufweist, der durch ein gleichmäßiges Sechseck gebildet ist.

4. Element nach Anspruch 2, das einen Querschnitt aufweist, der durch ein gleichmäßiges Trapez gebildet ist, das erhalten wird durch Schneiden eines gleichmäßigen Sechsecks mit einer Geraden (A), die durch zwei entgegengesetzte Winkel des Sechsecks verläuft.

5. Element nach Anspruch 2, das einen Querschnitt aufweist, der durch ein rechtwinkliges Trapez gebildet ist, das erhalten ist durch Schneiden eines gleichmäßigen Sechsecks mit einer Geraden (A), die durch zwei entgegengesetzte Winkel des Sechsecks verläuft, und mit einer Mittelsenkrechten (B) einer Seite des Sechsecks, wobei die Gerade und die Mittelsenkrechte zueinander orthogonal sind.

6. Element nach einem der vorhergehenden Ansprüche, umfassend ein erstes Rohr (18), das die Aufnahme (14) begrenzt und auf dichte Weise durch die Stopfen (34) verschlossen ist, wobei das erste Rohr (18) dazu ausgelegt ist, in direktem Kontakt mit wenigstens einer Hülle (16) und durch den Kühldurchgang (19) umgeben zu sein, sowie ein zweites Rohr (20), das zusammen mit dem ersten Rohr (18) den Kühlkanal (19) begrenzt, wobei das zweite Rohr (20) von Beton umgeben ist.

7. Element nach dem vorhergehenden Anspruch, bei dem das erste Rohr (18) in dem zweiten Rohr (20) mit Hilfe von Flanschen (22) aufgehängt gehalten ist, die an den longitudinalen Enden (24, 26, 28, 30) des ersten (18) und des zweiten (20) Rohrs befestigt sind, und in denen die Ventilationsöffnungen (32) realisiert sind, wobei die Flansche die Stopfen (34) aufnehmen und die longitudinalen Flächen des Elements bilden.

8. Element nach dem vorhergehenden Anspruch, bei dem die Stopfen (34) an die Flansche (22) geschweißt sind.

9. Element nach Anspruch 7 oder 8, bei dem Metalldichtungen (40.1, 40.2) und eine Dichtung aus Kunststoffmaterial (42) zwischen den Stopfen (34) und den Flanschen (22) vorgesehen sind.

10. Element nach einem der Ansprüche 1 bis 9, umfassend Mittel zur Kontrolle der Dichtigkeit der Hülle (16) und der Aufnahme (14).

11. Element nach dem vorhergehenden Anspruch, bei dem die Mittel zur Kontrolle Mittel zur Injektion von Helium und zur Erfassung von Helium umfassen.

12. Element nach Anspruch 10 oder 11, bei dem die Mittel zur Kontrolle Sensoren für den Druck umfassen, der in der Aufnahme (14) herrscht.

13. Modul zur horizontalen Lagerung von Kernbrennstoff in einer Hülle, umfassend einen Stapel von Elementen (4.1, 4.2, 4.3) nach einem der vorhergehenden Ansprüche.

14. Modul nach dem vorhergehenden Anspruch in Kombination mit Anspruch 2, bei dem alle Elemente (4.1, 4.2, 4.3) einen Querschnitt aufweisen, der ausgehend von ein und demselben gleichmäßigen Sechseck derart erhalten ist, dass ein kompakter Stapel gebildet wird.

15. Modul nach Anspruch 13 oder 14, das von einer Betonkappe (8, 10, 12) an einer unteren Fläche (8), einer oberen Fläche (12) und Seitenflächen (12) umgeben ist, wobei die longitudinalen Flächen der Aufnahmen (14) nicht bedeckt sind.

## Claims

1. Element for the storage of nuclear fuel comprising at least one housing (14) with a longitudinal axis (X) intended to be horizontal to hold a case (16) full of nuclear fuel, first (24) and second (28) longitudinal ends provided with passages to access the housing, and ventilation means **characterized in that** said passages are closed and sealed by removable plugs (34), and **in that** said ventilation means comprise a cooling channel (19) surrounding the housing (14) and insulated from said housing in a sealed manner, and ventilation ports (32) made in the first and second faces of the element and opening up in said cooling channel.

2. Element according to claim 1, with a cross-section formed by at least one portion of a regular hexagon.

3. Element according to claim 2, with a cross-section formed by a regular hexagon.

4. Element according to claim 2, with a cross-section formed by a regular trapezium obtained by cutting a regular hexagon with a straight line (A) passing through two opposite apexes of said hexagon.

5. Element according to claim 2, with a cross-section formed by a rectnagular trapezium obtained by cutting a regular hexagon with a mid-perpendicular (A) passing through two opposite apexes of said hexagon and by a mid-perpendicular (B) of one side of said hexagon, the straight line and the mid-perpendicular being perpendicular to each other.

6. Element according to any one of the previous claims, comprising a first tube (18) delimiting the housing (14) and closed in a sealed manner by the plugs (34), said first tube (18) being designed to be in direct contact with at least one case (16), and surrounded by the cooling passage (19), and a second tube (20) delimiting the cooling channel (19) with the first tube (18), the second tube (20) being surrounded by concrete.

7. Element according to the previous claim, in which the first tube (18) is held suspended in the second tube (20) by means of end plates (22) fixed to the longitudinal ends (24, 26, 28, 30) of the first (18) and second (20) tubes, and in which ventilation ports (32) are formed, said end plates receiving the plugs (34) and forming the longitudinal faces of the element.

8. Element according to the previous claim, in which the plugs (34) are welded on the end plates (22).

9. Element according to claim 7 or 8, in which metal gaskets (40.1, 40.2) and a synthetic gasket (42) are provided between the plugs (34) and the end plates (22).

10. Element according to any one of claims 1 to 9, comprising means of controlling the seal of the case (16) and the housing (14).

11. Element according to the previous claim, in which the control means comprise means of injecting helium and detecting helium.

12. Element according to claim 10 or 11, in which the control means comprise sensors to measure the pressure in the housing (14).

13. Module for horizontal storage of nuclear fuel in cases, comprising a stack of elements (4.1, 4.2, 4.3) according to any one of the previous claims.

14. Module according to the previous claim in combination with claim 2, in which all elements (4.1, 4.2, 4.3) have a cross-section obtained from a single regular hexagon so as to form a compact stack.

15. Module according to claim 13 or 14, surrounded by a concrete screed (8, 10, 12) on a lower face (8), an upper face (12) and on the lateral faces (12), the longitudinal faces of the housings (14) not being covered.
